# EUROPÄISCHE PATENTSCHRIFT

(11) **EP 0 993 481 B1**
(45) Veröffentlichungstag und Bekanntmachung des Hinweises auf die Patenterteilung: **05.03.2008**
(21) Anmeldenummer: 98937493.9
(22) Anmeldetag: 17.06.1998
(51) Int. Cl.: C08G 64/16, C08G 64/30

(54) **VERFAHREN ZUR HERSTELLUNG VON VERZWEIGTEN POLYCARBONATEN**
METHOD FOR PRODUCING BRANCHED POLYCARBONATES
PROCEDE DE PRODUCTION DE POLYCARBONATES RAMIFIES

(30) Priorität: 30.06.1997 DE 19727709
(43) Veröffentlichungstag der Anmeldung: 19.04.2000
(73) Patentinhaber: Bayer MaterialScience AG, 51368 Leverkusen (DE)
(72) Erfinder: KÖNIG, Annett, D-47800 Krefeld (DE); BUNZEL, Lothar, D-47906 Kempen (DE); HUCKS, Uwe, D-46519 Alpen (DE)
(86) Internationale Anmeldenummer: PCT/EP1998/003653
(87) Internationale Veröffentlichungsnummer: WO 1999/001495

(56) Entgegenhaltungen:
- EP-A- 0 140 341
- EP-A- 0 708 130
- DE-A- 3 308 691
- FR-A- 2 010 777

## Beschreibung

Gegenstand der vorliegenden Erfindung ist ein Verfahren zur Herstellung von verzweigten Polycarbonaten nach dem Schmelzumesterungsverfahren von Diphenolen, Diarylcarbonaten und Verzweigern gegebenenfalls unter Verwendung von Katalysatoren bei Temperaturen zwischen 80 und 400°C und bei Drücken zwischen 1013,5 mbar (1 Atm.) und 0,01 mbar, das dadurch gekennzeichnet ist, daß man als Verzweiger drei- bis Sechswetige aliphatische Alkohole ausgewählt aus Pentaerythrit oder dessen durch Selbstkondensation entstandenen Ether Dipentaerythrit Glycerin, 1,2,3,6-Hexantetrol und 2,5-Dimethyl-1,2,6-hexantriol in Mengen von 0,05 mol bis 2 mol, vorzugsweise von 0,10 mol bis 1,5 mol pro 100 mol Diphenol einsetzt.

Die nach dem erfindungsgemäßen Verfahren hergestellten Polycarbonate sind lösungsnüttelfrei und mit heller Eigenfarbe ausgestattet, sie besitzen bevorzugt einen niedrigen OH-Endgruppengehalt von < 1200 ppm und zeichnen sich durch erhöhte Schmelzestandfestigkeit und Strukturviskosität und durch ein verringertes Abtropfverhalten im Brandfall gegenüber linearem Polycarbonat aus.

In der DE-A 15 70 533 ist die Herstellung von verzweigten Polycarbonaten nach dem Schmelzumesterungsverfahren beschrieben. Als Verzweiger dienen jedoch nur phenolische Verbindungen.

Gemäß DE-A 25 00 092 werden 3,3-Bis-(4-hydroxyaryl)-oxindole als Verzweiger zur Herstellung von verzweigten Polycarbonaten eingesetzt.

In der EP-A 0 140 341 wird die Herstellung eines verzweigten Polycarbonats über das Schmelzumesterungsverfahren unter Verwendung von Triarylestern von Tricarbonsäuren, beispielsweise der Trimellitsäure, als Verzweiger beschrieben. In der EP-A 0 708 130 wird in einem speziellen 2-Stufenverfahren unter anderem 1,3,5-Tris-(2-hydroxyethyl)-cyanursäure (II) 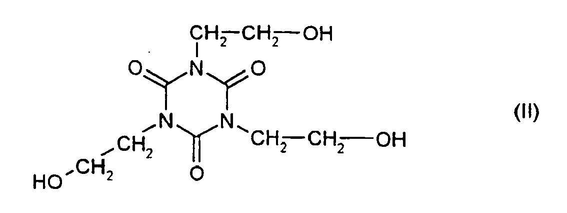 als Verzweiger genannt (Seite 4, Zeile 33 von EP-A 0 708 130), jedoch nicht in den Beispielen eingesetzt.

Verbindung (II) dürfte sich jedoch bei den Temperaturen der Schmelzumesterung unter Abspaltung von 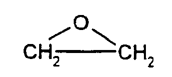 umwandeln und zersetzen.

Entsprechendes gilt für den als Verzweiger genannten 3,4,5-Trihydrooyphenylethylalkohol (III) EP-A 0 708 130,(Seite 4, Zeile 41)

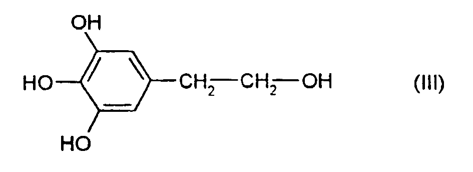

Auch hier ist Abspaltung von 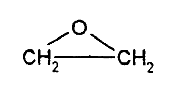 denkbar.

Demgegenüber sind die erfindungsgemäß einzusetzenden aliphatischen Alkohole der Formel (I) thermisch stabil, bauen also nicht ab, sondern werden allenfalls zu höhermolekularen Äthern aufgebaut.

Da nun aber aliphatische Polyalkohole im technisch genutzten Phasengrenzflächenverfahren nicht geregelt einbauen, und da das Verfahren in organischer Lösung, das sogenannte Pyridinverfahren technisch nicht mehr genutzt wird, bietet das erfindungsgemäße Verfahren oder Schmelzumesterung eine praktische Methode, um aliphatische Verzweigungsstellen mit guter Reproduzierbarkeit in thermoplastische, aromatische Polycarbonate einzubauen.

Erfindungsgemäß geeignete Diphenole sind solche der Formel (IV)

HO-Z-OH (IV)

worin
- Z: einen bivalenten Rest mit vorzugsweise 6 bis 30 C-Atomen ist, der einkernig oder mehrkernig sein kann, Heteroatome enthalten kann, verbrückt oder annelliert sein kann und gegebenenfalls inerte Substituenten enthalten kann, die unter den Reaktionsbedingungen des erfindungsgemäßen Verfahrens als auch
unter den bekannten Verarbeitungsbedingungen der erfindungsgemäß erhältlichen Polycarbonate sich nicht verändern bzw. nicht reagieren.

Beispielsweise seien Hydrochinon, Resorcin, Bis-(hydroxyphenyl)-alkane, Bis-(hydroxyphenyl)-cycloalkane, Bis-(hydroxyphenyl)-sulfide, -ether, -sulfoxide, -sulfone, und α,α-Bis-(hydroxphenyl)-diisopropylbenzole, sowie deren kernalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050, sowie in der Monographie "H. Schnell, Chemistry and Physics of Polycarbonates, Interscience Publishers, New York, 1964" beschrieben.

Bevorzugte Diphenole sind
4,4'-Dihydroxyphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α-Bis-(4-hydroxyphenyl)-p-diisopropylbenzol,
α,α-Bis-(4-hydroxyphenyl)-m-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α-Bis-(3,5-dimethyl-4-hydroxyphenyl)-p-diisopropylbenzol,
1,1-Bis-(4-hydroxyphenyl)-3,3,5-trimethylcyclohexan,
1,1-B is-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methylcyclohexan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-1-phenyl-ethan,
2,2-Bis-(3,5-dimethyl-4-hydroxyphenyl)-2-phenyl-ethan,
2,2-Bis-(4-hydroxyphenyl)-2,2-diphenyl-ethan,
9,9-Bis-(4-hydroxyphenyl)-fluoren,
9,9-Bis-(3, 5-dimethyl-4-hydroxyphenyl)-fluoren.

Besonders bevorzugte Diphenole sind z.B.
2,2-Bis-(4-hydroxyphenyl)-propan,
2,2-Bis-(3,5-dimethyl-4-hydroxyphenyl)-propan,
1,1-Bis-(4-hydroxyphenyl)-cyclohexan,
1,1-Bis-(4-hydroxyphenyl)-1-phenyl-ethan,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-4-methylcyclohexan,
9,9-Bis-(3, 5-dimethyl-4-hydroxyphenyl)-fluoren.

Insbesondere sind 2,2-Bis-(4-hydroxyphenyl)-propan, 1,1-Bis-(4-hydroxyphenyl)-3,3,5-trimethylcyclohexan und 1,1-Bis-(4-hydroxy-phenyl)-1-phenyl-ethan bevorzugt.

Es können auch beliebige Mischungen der vorgenannten Diphenole verwendet werden.

Kohlensäureester im Sinne der vorliegenden Erfindung sind Di-C₆-C₁₄-Arylester, vorzugsweise die Diester von Phenol oder alkylsubstituierten Phenolen, also Diphenylcarbonat oder Dikresylcarbonat.

Bezogen auf 1 mol Bisphenol werden die Kohlensäurediester in 1,01 bis 1,30 mol, bevorzugt in 1,02 bis 1,15 mol eingesetzt.

Die Diphenole, die Kohlensäurediester und die Verzweiger werden in möglichst reiner Form eingesetzt. Reine Diphenole und reine Kohlensäureester werden durch Umkristallisation in bekannter Weise erhalten. Wäsche oder Destillation und weitere Möglichkeiten, die Diphenole und die Kohlensäureester zu reinigen.

Bevorzugt einzusetzende Katalysatoren sind die literaturbekannten Ammonium- und Phosphoniumsalze (siehe beispielsweise US-A 3 442 864, JP-A-14742/72, US-A 5 399 659 und DE-A 19 539 290).

Beispiele dafür sind die der Formeln (Va) und (Vb) 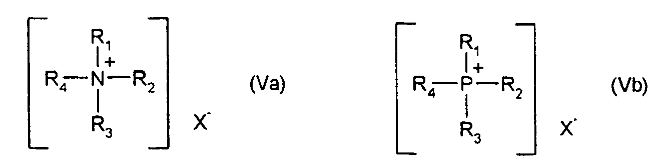 worin
R₁ bis R₄ unabhängig voneinander C₁-C₁₆-Alkyle/Aryle oder Cycloalkyle sein können und X⁻ ein Anion ist, bei dem das korrespondierende Säure-Base-Paar H⁺ + X⁻ ⇔ HX einen pK_{B} von < 11 besitzt.

Geeignete Ammoniumsalze bzw. Phosphoniumsalze sind beispielsweise
Tetramethylammoniumtetraphenylboranat,
Tetraphenylphosphoniumphenolat,
Tetraphenylphosphoniumfluorid,
Tetraphenylphosphoniumtetraphenylboranat,
Dimethyldiphenylammoniumhydroxid,
Tetraethylammoniumhydroxid,
Tetramethylammoniumhydroxid,
Tetramethylammoniumacetat und
Tetramethylammoniumfluorid.

Bevorzugt einzusetzende Katalysatoren sind auch Guanidine gemäß US-A 5 319 066. Geeignet sind aber auch Imidazole.

Die Katalysatoren werden bevorzugt in Mengen von 10⁻⁸ bis 10⁻⁴ mol, besonders bevorzugt in einer Konzentration von 10⁻⁷ bis 10⁻⁵ mol bezogen auf 1 mol Diphenol eingesetzt.

Die Katalysatoren können allein oder in Kombination miteinander eingesetzt werden; sie können zu Beginn des Verfahrens oder erst im Verlauf des Verfahrens zugesetzt werden.

Im Falle der Verwendung von Katalysatorkombinationen können auch Alkali- oder Erdalkali-Verbindungen bzw. -Salze mitverwendet werden, und zwar im Verlauf des Verfahrens, also in der Polykondensationsphase, wie dies im bereits zitierten US-A 5 399 659 dargelegt ist.

Das erfindungsgemäße Verfahren kann generell in einer Stufe durchgeführt werden, wobei hierbei alle Reaktanden bei Temperaturen von 80°C bis 250°C, vorzugsweise von 100 bis 230°C und insbesondere von 120 bis 190°C unter normalem Druck in 0,1 bis 5 Stunden, vorzugsweise in 0,25 bis 3 Stunden aufgeschmolzen werden.

Die erfindungsgemäß einzusetzenden Verzweiger können hierbei auch erst etwas verspätet der Schmelze aus Diphenolen und Diarylcarbonaten zugesetzt werden.

Danach wird durch Anlegen von Vakuum und Erhöhung der Temperatur durch Abdestillieren des Monophenols ein Oligocarbonat hergestellt. Im weiteren wird dann bei der Polykondensation durch weiteres Erhöhen der Temperatur auf 240 bis 400°C und Erniedrigung des Drucks bis auf 0,01 mbar das Polycarbonat hergestellt.

Die erfindungsgemäße Reaktion ohne Einsatz von Katalysatoren bedarf sehr langer Reaktionszeiten, deshalb wird vorzugsweise unter Verwendung eines oder zweier Katalysatoren die Reaktion durchgeführt.

Bei Einsatz eines Katalysators wird diese entweder vor dem Aufschmelzen oder der Schmelze vor der Oligocarbonatherstellung zudosiert.

Bei Einsatz zweier Katalysatoren werden diese vorzugsweise getrennt zugesetzt, und zwar einer zu Beginn den Reaktanden und der zweite der Schmelze des Oligocarbonats.

Die Reaktionszeiten können dadurch verkürzt und die Reaktionstemperaturen, vor allem in der Polykondensationsphase vermindert werden.

Der zeitlich getrennte Zusatz zweier Katalysatoren geht im allgemeinen mit der stufenweisen Verfahrensführung einher, das heißt, daß die Reaktion zu mindestens einer Stelle unterbrochen wird. Dies erfolgt vorzugsweise nach Erreichen der Oligocarbonatstufe.

Hierbei werden, wie bereits angesprochen, in der zweiten Stufe vorzugsweise auch Alkali- oder Erdalkalikatalysatoren in Mengen von 10⁻⁸ bis 10⁻⁴ mol, vorzugsweise von 10⁻⁷ bis 10⁻⁵ mol, pro Mol an ursprünglich eingesetztem Diphenol, eingesetzt. Beispiele sind die Lithium-, Natrium-, Kalium-, Cäsium-, Calzium-, Barium-, Magnesium-, -hydroxide, -carbonate, -halogenide, -phenolate, -diphenolate, -fluoride, -acetate, -phosphate, -hydrogenphosphate und -boranate.

Die stufenweise Verfahrensführung bietet auch die Möglichkeit, den Verzweiger noch später einzusetzen, also beispielsweise erst dem Oligocarbonat.

Der Zusatz der erfindungsgemäß einzusetzenden Verzweiger kann in Substanz, fest oder geschmolzen, als Lösung in Wasser, eingeschmolzen in Phenol oder als Konzentrat in dem in Rede stehenden Oligo- oder Polycarbonat zugesetzt werden.

Zur Molekulargewichtsregulierung, d.h. zum Kettenabbruch können schwerflüchtige Phenole, wie Camylphenol oder 4-Phenylphenol in Mengen von 0,01 - 10 mol-%, pro Mol Diphenol gezielt eingesetzt werden.

Die Temperaturführung bei der zweistufigen Verfahrensweise liegt für die Herstellung der Oligocarbonate zwischen 100 und 290°C, vorzugsweise zwischen 150 und 280°C und für die Polykondensation der Oligocarbonate zwischen 230°C und 400°C, vorzugsweise zwischen 250 und 320°C.

Der Druckbereich liegt für die Herstellung der Oligocarbonate zwischen 1 bar und 0,5 mbar, vorzugsweise zwischen 500 mbar und 1 mbar.

Für die Polykondensation liegt der Druckbereich zwischen 100 mbar und 0,01 mbar.

Die Oligocarbonate weisen mittlere Molekulargewichte M_{W} von 3000 bis 24000, bevorzugt 5000 bis 20000 auf, ermittelt durch Messung der relativen Lösungsviskosität in Dichlormethan oder in Mischungen gleicher Gewichtsmengen Phenol/o-Dichlorbenzol geeicht durch Lichtstreuung.

Die nach dem erfindungsgemäßen verfahren erhältlichen Polycarbonate haben mittlere Gewichtsmolmassen von 12000 bis 60000, vorzugsweise 15000 bis 40000, ermittelt durch Messung der relativen Lösungsviskosität in Dichlormethan oder in Mischungen gleicher Gewichtsmengen Phenol/o-Dichlorbenzol, geeicht durch Lichtstreuung.

Das erfindungsgemäße Verfahren kann kontinuierlich oder diskontinuierlich beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren durchgeführt werden.

Zur Verbesserung der Eigenschaften können den erfindungsgemäß hergestellten Polycarbonaten die für Polycarbonat typischen Additive, Stabilisatoren, Füll- und Verstärkungsstoffe zugemischt werden. Als solche sind u.a. in Betracht zu ziehen: Stabilisatoren (z.B. UV-, Thermo-, Gammastrahlenstabilisatoren), Antistatika, Fließhilfsmittel, Entformungsmittel, Brandschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas und Kohlenstoffasern.

Weiterhin können den erfindungsgemäßen Polycarbonaten auch andere Polymere zugemischt werden, z.B. Polyolefine, Polyurethane, Polystyrol.

Der Zusatz dieser Stoffe erfolgt vorzugsweise auf herkömmlichen Aggregaten zum fertigen Polycarbonat.

Die nach den erfindungsgemäßen Verfahren hergestellten Polycarbonate eignen sich sowohl für Extrusionsals auch für Spritzgußverarbeitung. Wegen der hervorragenden Standfestigkeit des Schmelzstrangs eignen sie sich auch zur Herstellung von Hohlkörpern nach dem Blasverformungsverfahren. Die ausgezeichneten strukturviskosen Eigenschaften ermöglichen es z.B. Extrusionsfolien mit guten mechanischen Eigenschaften und verminderter Spannungsrißkorrosion leicht zugänglich zu erhalten. Durch Spritzguß können Formkörper und Formteile aller Art, wie Gehäuse, Spulenkörper, Abdeckungen, Haushaltsgeräte usw. hergestellt werden.

### Beispiele

Zur Charakterisierung der Verzweigung von Polycarbonaten kann sie SV-Zahl herangezogen werden. Sie ist definiert als Quotient aus den Schmelzviskositäten bei 10 s⁻¹ und 10³ s⁻¹. Je größer dieser Quotient ist, desto größer ist die Abweichung vom Newtonschen Verhalten, d.h. umso größer die die Strukturviskosität.

### Vergleichsbeispiel 1

In einem 500 ml Dreihalskolben mit Rührer, Innenthermometer und Vigreuxkolonne (30 cm, verspiegelt) mit Brücke werden 114,15 g (0,500 mol) Bisphenol A und 113,54 g (0,530 mol) Diphenylcarbonat eingewogen. Die Apparatur wurde durch Anlegen von Vakuum und Spülen mit Stickstoff (3 mal) vom Luftsauerstoff befreit und das Gemisch auf 150°C aufgeheizt. Jetzt werden 0,0074 g (4* 10⁻³ mol-%) eines Aduktes aus 70 % Tetraphenylphosphoniumphenolat und 30 % Phenol bezogen auf Bisphenol A, zugegeben und das entstehende Phenol bei 100 mbar abdestilliert. Gleichzeitig wird die Temperatur bis auf 250°C gesteigert. Nach 1 Stunde wird das Vakuum auf 10 mbar verbessert. Durch Absenken des Vakuums auf 0,5 mbar und Temperaturerhöhung auf 280°C wird die Polykondensation erreicht.

### Beispiel 1

In einem 500 ml Dreihalskolben mit Rührer, Innenthermometer und Vigreuxkolonne (30 cm, verspiegelt) mit Brücke werden 114,15 g (0,500 mol) Bisphenol A, 113,54 g (0,530 mol) Diphenylcarbonat und 0,003 mol (0,204 g) Pentaerythrit eingewogen. Die Apparatur wurde durch Anlegen von Vakuum und Spülen mit Stickstoff (3 mal) vom Luftsauerstoff befreit und das Gemisch auf 150°C aufgeheizt. Jetzt werden 0,0074 g (4*10⁻³ mol-%) eines Adduktes aus 70 % Tetraphenylphosphoniumphenolat und 30 % Phenol bezogen auf Bisphenol A, zugegeben und das entstehende Phenol bei 100 mbar abdestilliert. Gleichzeitig wird die Temperatur bis auf 250°C gesteigert. Nach 1 Stunde wird das Vakuum auf 10 mbar verbessert. Durch Absenken des Vakuums auf 0,5 mbar und Temperaturerhöhung auf 280°C wird die Polykondensation erreicht.

### Beispiel 2

wie Beispiel 1, nur mit 0,004 mol (0,272 g) Pentaerythrit.

### Beispiel 3

wie Beispiel 1, nur mit 0,008 mol (0,544 g) Pentaerythrit.

### Beispiel 4

wie Beispiel 1, nur mit 0,003 mol (0,381 g) Dipentaerythrit.

### Beispiel 5

wie Beispiel 1, nur mit 0,008 mol (1,016 g) Dipentaerythrit.

| Bsp. | Verzweiger | Verzweiger in mol-.% | phenol. OH in ppm | ηᵣₑₗ* (Schmelze) | ηᵣₑₗ * (Strang) | SV-Zahl | Farb-zahl |
|---|---|---|---|---|---|---|---|
| Vgl. 1 | - | - | 380 | 1,246 | 1,232 | 1,80 | 0,28 |
| 1 | Pentaerythrit | 0,3 | 260 | 1,328 | 1,319 | 2,55 | 0,30 |
| 2 | Pentaerythrit | 0,4 | 380 | 1,335 | 1,330 | 3,27 | 0,30 |
| 3 | Pentaerythrit | 0,8 | 360 | 1,396 | 1,378 | 5,32 | 0,32 |
| 4 | Dipentaerythrit | 0,3 | 300 | 1,317 | 1,299 | 2,58 | 0,35 |
| 5 | Dipentaerythrit | 0,8 | 320 | 1,398 | 1,381 | 3,97 | 0,31 |

| | | | | | | | |
|---|---|---|---|---|---|---|---|
| *gemessen in Dichlormethan bei 25°C und 5 g/l. | | | | | | | |

## Patentansprüche

1. Verfahren zur Herstellung von verzweigten Polycarbonaten nach dem Schmelzumesterungsverfahren aus Diphenolen, Diarylcarbonaten und Verzweigern, gegebenenfalls unter Verwendung von Katalysatoren bei Temperaturen zwischen 80°C und 400°C und bei Drücken zwischen 1013,5 mbar (1 Atm) und 0,01 mbar, **dadurch gekennzeichnet, daß** man als Verzweiger drei- bis sechswertige aliphatische Alkohole ausgewählt aus Pentaerythrit oder dessen durch Selbstkondensation entstandenen Ether Dipentaerythrit, Glycerin, 1,2,3,6-Hexantetrol und 2,5-Dimethyl-1,2,6-hexantriol in Mengen von 0,05 mol bis 2 mol pro 100 mol Diphenol einsetzt.

2. Verfahren gemäß Anspruch 1, **dadurch gekennzeichnet, daß** man die Verzweiger in Mengen von 0,1 mol bis 1,5 mol, pro 100 mol Diphenol einsetzt.

## Claims

1. A process for producing branched polycarbonates, by the melt transesterification method, from diphenols, diaryl carbonates and branching agents, optionally with the use of catalysts, at temperatures between 80°C and 400°C and at pressures between 1013.5 mbar (1 atm.) and 0.01 mbar, **characterised in that** tri- to hexahydric aliphatic alcohols selected from pentaerythritol or its ether dipentaerythritol formed by self-condensation, glycerol, 1,2,3,6-hexanetetrol and 2,5-dimethyl-1,2,6-hexanetriol, in amounts of 0.05 mole to 2 moles per 100 moles of diphenol, are used as branching agents.

2. A process according to claim 1, **characterised in that** the branching agents are used in amounts of 0.1 mole to 1.5 moles per 100 moles of diphenol.

## Revendications

1. Procédé pour la préparation de polycarbonates ramifiés selon le procédé de transestérification à l'état de fusion de diphénols, de carbonates de diaryle et d'agents de ramification, éventuellement en utilisant des catalyseurs à des températures comprises entre 80°C et 400°C et à des pressions comprises entre 1013,5 mbar (1 Atm) et 0,01 mbar, **caractérisé en ce que** l'on utilise comme agents de ramification des alcools aliphatiques tri- à hexavalents choisis parmi le pentaérythritol ou son éther-dipentaérythritol produit par autocondensation, la glycérine, le 1,2,3,6-hexanetétrol et le 2,5-diméthyl-1,2,6-hexanetriol dans des quantités de 0,05 mol à 2 mol pour 100 mol de diphénol.

2. Procédé selon la revendication 1, **caractérisé en ce que** l'on utilise les agents de ramification dans des quantités de 0,1 mol à 1,5 mol pour 100 mol de diphénol.
